(19) **Europäisches Patentamt**

**European Patent Office**

**Office européen des brevets**

(11) Veröffentlichungsnummer: **0 357 930 B1**

(12) **EUROPÄISCHE PATENTSCHRIFT**

(45) Veröffentlichungstag der Patentschrift: **16.12.92**

(21) Anmeldenummer: **89113747.3**

(22) Anmeldetag: **26.07.89**

(51) Int. Cl.5: **B65G 1/06**, E04C 3/07

(54) **Kaltprofilträger.**

(30) Priorität: **01.09.88 DE 3829719**

(43) Veröffentlichungstag der Anmeldung:
**14.03.90 Patentblatt 90/11**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**EP-A- 0 110 373**
**EP-A- 0 132 894**
**CH-A- 511 992**
**DE-U- 8 813 290**
**FR-A- 1 534 871**

(73) Patentinhaber: **KRUPP STAHL KALTFORM
GMBH
Friedrichstrasse 3
W-5090 Leverkusen(DE)**

(72) Erfinder: **Thierauf, Georg, Prof. Dr.-Ing.
Nöckersberg 3
W-4300 Essen(DE)**

(74) Vertreter: **Cohausz & Florack Patentanwälte
Postfach 14 01 61 Schumannstrasse 97
W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfingung betrifft einen Kaltprofilträger mit einem zu einer Seite weisenden Untergurt, einem zur anderen Seite weisenden Obergurt und mit einem Untergurt und Obergurt miteinander verbindenden stumpfwinklig geknickten Steg, sowie mit einer Lippe am Obergurt und mit einer Lippe am Untergurt, wobei der Steg in seinem Mittelbereich zu der Seite hin, auf der die Lippe des Untergurtes liegt, geknickt ist und in diesem Knick des Steges der dem Untergurt benachbarte gerade vertikale untere Teil des Steges mit dem weitgehend geraden oberen Teil des Steges den stumpfen Winkel ($\beta$) bildet.

Ein Kaltprofilträger mit den vorgenannten Merkmalen ist aus der EP-A-0 132 894 bekannt. Weitere Kaltprofilträger sind in verschiedenen Ausführungsformen bekannt, unter anderem als Pfette für eine geneigt verlaufende Dachhaut aus der DE-A-33 15 694. Bei diesem bekannten Pfettenprofil liegen Untergurt und Obergurt in zueinander parallelen Ebenen, sind über einen schrägen, im Bereich der Gurte jeweils geknickten Steg miteinander verbunden und haben jeweils eine Lippe an der freien Kante. Die bekannte Pfette ist als Z-Profil gestaltet.

Aufgabe der Erfindung ist es nun, einen gattungsgemäßen Kaltprofilträger derart weiter zu entwickeln, daß sein Profil, im Querschnitt betrachtet, geeignet ist, eine von der Lotrechten abweichende Auflast bei günstigen Spannungsverhältnissen im Kaltprofilträger aufzunehmen und so auszugestalten, daß er mit wirtschaftlichem Materialaufwand sowohl kleinere wie auch größere Auflagelasten aufzunehmen vermag. Eine weitere Aufgabe der Erfindung ist es, den Kaltprofilträger einem vorteilhaften Verwendungszweck zuzuführen.

Erfindungsgemäß wird daher vorgeschlagen, daß der Untergurt mit dem vertikalen unteren Teil des Steges einen Winkel ($\alpha$) bildet, der zwischen 80° und 100° liegt, daß der an den oberen Teil des Steges anschließenden Obergurt gegenüber der horizontalen Ebene in einem spitzen Winkel ($\gamma$) von 5° bis 50° steht, und daß der Obergurt leicht gekrümmt ist.

Die gewählte Kennzeichnung der Erfindung geht für den Fachmann erkennbar vom regelmäßigen Einbauzustand des erfindungsgemäßen Kaltprofilträgers aus, bei dem der an den Untergurt anschließende untere Teil des Steges senkrecht zur Horizontalen steht, wobei der Untergurt selbst in Sonderfällen nicht ganz horizontal verläuft, sondern mit dem Untergurt einen Winkel ($\alpha$) zwischen 80° und 100° bilden kann. Der Obergurt soll leicht gekrümmt sein. Er weist damit nicht nur eine besondere Beulsteifigkeit auf, sondern wird auch dem extremen Belastungsalternativen einer kleineren Auflast im Bereich des Anschlusses zum Oberteil des Steges wie auch einer größeren, mehr zum freien Ende des Obergurtes angreifenden Auflast gerecht. Bevorzugt wird jedoch die Profilgestaltung nach Anspruch 2, bei der der untere Teil des Steges und der Untergurt einen rechten Winkel bilden. Ist bei dieser Ausführungsform die untere Lippe am Untergurt nach oben gerichtet, so kann der Kaltprofilträger mit dem Untergurt als Fuß auf einer ebenen Unterlage stehen. Ist die untere Lippe nach unten gerichtet, so kann sie seitlicher Anschlag für einen auf einem Längsträger mit dem Untergurt aufsitzenden Kaltprofilträger sein. Zweckmäßig ist für viele Anwendungsfälle die Profilgestaltung nach Anspruch 3, die vorsieht, daß die obere Lippe des Obergurtes und die untere Lippe des Untergurtes in die gleiche Richtung zeigen und parallel zum vertikalen unteren Teil des Steges stehen.

Die Ausführungsform nach Patentanspruch 4, bei der der untere Teil des Steges und die obere Lippe in der durch den unteren Teil des Steges bestimmten senkrechten Bezugsebene liegen, ist insofern montagefreundlich, als sowohl der untere Teil des Steges wie auch die Lippe mit einer senkrechten Fläche eines seitlichen Widerlagers verbunden oder an dieser abgestützt werden können.

In Patentanspruch 5, sind vorteilhafte Dimensionierungen eines Kaltprofilträgers mit gekrümmtem Obergurt niedergelegt. Dabei ist vorgesehen, daß die im Anschlußereich des Obergurtes durch den Winkel $\gamma$ bestimmte Steigung des Obergurtes im Bereich seiner freien Seite bzw. im Bereich des Überganges zur oberen Lippe einen Winkel $\gamma1$ von 5° bis 30° mit einer dem Untergurt parallelen Ebene bildet.

Zur weiteren Optimierung der Profilgestaltung ist gemäß Anspruch 6 vorgesehen, daß der Untergurt innerhalb einer zum vertikalen unteren Teil des Steges parallelen Projektion des Obergurtes in die durch den Ansatz des Untergurtes gehende horizontale Ebene liegt, die bei einem rechtwinklig angesetzten Untergurt durch den Untergurt selbst bestimmt wird.

Der Kaltprofilträger mit einer Lippe am Obergurt läßt sich auf einfache Weise verstärken und zu einem geschlossenen Profilträger machen, indem gemäß Patentanspruch 7 der untere Teil des Steges und die obere Lippe über ein seitlich angesetztes, flächiges Verbindungselement miteinander verbunden werden.

Nach Patentanspruch 8 wird eine erfindungsgemäße Verwendung des Kaltprofilträgers vorgeschlagen, nämlich die Verwendung eines Kaltprofilträgers mit den Merkmalen nach einem der Ansprüche 1 bis 6 als Stützelement für zylindrische Körper, wobei vorgesehen ist, daß zwei Kaltprofilträger spiegelbildlich, mit Abstand und parallel zueinander angeordnet und die voneinander weg ansteigenden Obergurte Auflagen für die zylindrischen Körper sind. Dabei werden die beiden Kaltprofilträger mindestens im Bereich ihrer Trägerenden auf festen Widerlagern gelagert.

Im nachfolgenden wird die Erfindung anhand von Ausführungsbeispielen beschrieben:

Es zeigt, im wesentlichen jeweils als Stirnansicht des Profilträgers

Fig. 1    einen Kaltprofilträger mit gewölbtem Obergurt

Fig. 2    eine bevorzugte Profilform

Fig. 3    eine weitere Profilform

Fig. 4    einen Kaltprofilträger mit einer seitlich befestigten geknickten Kunststoffplatte

Fig. 5    einen Kaltprofilträger mit einer seitlich befestigten Stahlplatte

Fig. 6    einen weiteren Kaltprofilträger mit seitlich befestigter Stahlplatte

Fig. 7    Kaltprofilträger als Stützelement in einem Regallager für Papierrollen

Fig. 8    eine Seitenansicht einer Sektion eines Papierrollenlagers

Fig. 9    eine perspektivische Darstellung einer Stützkonstruktion mit der bevorzugten Profilform gemäß Fig. 2

Fig. 10    eine ausschnittweise Stirnansicht zu Fig. 9

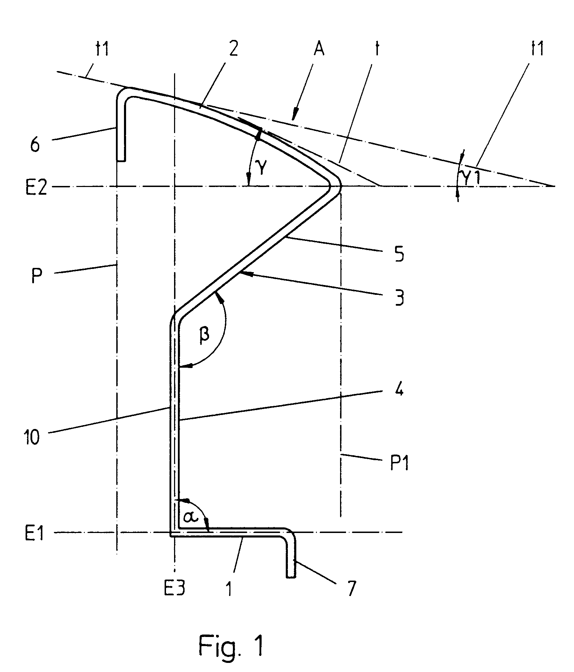

Die in Fig. 1 dargestellte Grundform des Profils zeigt einen Kaltprofilträger mit einem geraden Untergurt 1, einem gekrümmten Obergurt 2 und einem Untergurt 1 und Obergurt 2 verbindenden geknickten Steg 3, bei dem der gerade vertikale untere Teil 4 des Steges 3 unter einem rechten Winkel $\alpha$ an den Untergurt 1 anschließt und im Mittelbereich zu der Seite hin, auf der der Untergurt 1 liegt abgeknickt ist und im Knick mit dem geraden oberen Teil 5 des Steges 3 einen stumpfen Winkel $\beta$ bildet. Der Winkel $\beta$ wird in der Regel 110° bis 150° sein. Der an den oberen Teil 5 des Steges 3 anschließende Obergurt 2 ist dem Untergurt 1 entgegengesetzt gerichtet und schräg ansteigend ausgebildet. Am Obergurt 2 ist eine obere Lippe 6, am Untergurt 1 eine untere Lippe 7 vorgesehen, die in dieselbe Richtung, hier nach unten, zeigen.

Es sind weiterhin strichpunktierte Projektionslinien P und P1 eingezeichnet, die die senkrechte Projektion des Obergurtes in die Ebene E1 des Untergurtes und veranschaulichen und zeigen, daß der Untergurt 1 innerhalb dieser Projektion liegt.

Durch den mit einem rechten Winkel $\alpha$ an den unteren Teil 4 des Steges 3 angesetzten Untergurt 1 wird eine im Einbauzustand des Kaltprofilträgers regelmäßig waagerechte Ebene E1 bestimmt, zu der parallel eine gedachte horizontale Ebene E2, die durch den Übergang zwischen oberen Teil 5 des Steges 3 und Obergurt 2 geht, eingezeichnet ist.

Weiterhin ist eine durch den Übergang vom Untergurt 1 zum unteren Teil 4 des Steges 3 gehende senkrechte Bezugsebene E3 eingezeichnet. In dieser senkrechten Bezugsebene E3 liegt der vertikale untere Teil 4 des Steges 3.

Fig. 1 weist weiterhin aus, daß der Obergurt 2 von seinem Anschluß an den oberen Teil 5 des Steges 3 über die senkrechte Bezugsebene E3 hinaus zurückgeführt ist.

Ein Pfeil A soll eine von der Senkrechten abweichende Richtung einer Last andeuten.

Anfang und Ende der Krümmung des Obergurtes 2 sollen durch die Tangente t und die Tangente t1 ausgedrückt sein. Die Tangenten t und t1 sind Ausdruck der Steigung des Obergurtes und bilden einmal den dem Anschlußbereich des Obergurtes 2 zugeordneten Winkel $\gamma$, zum anderen einen kleineren Winkel $\gamma$1 jeweils mit der horizontalen Ebene E2. Die beiden genannten Winkel sind hier etwa 35° und 15°.

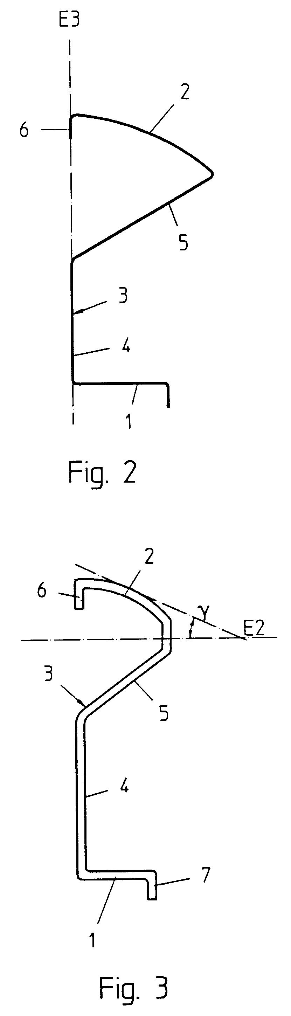

Fig. 2 zeigt einen Kaltprofilträger, bei dem die obere Lippe 6 und der vertikale untere Teil 4 des Steges 3 in der senkrechten Bezugsebene E3 liegen.

Der in Fig. 3 dargestellte Kaltprofilträger hat als Teil des oberen Teiles 5 des Steges 3 ein dem unteren Teil 4 des Steges 3 paralleles kurzes Übergangsstück. Das kurze Übergangsstück löst lediglich den Übergang zwischen dem oberen Teil 5 des Steges 3 und dem Obergurt 2 in zwei, bei dicken Blechen fertigungstechnisch einfacher herzustellende Übergänge auf, ohne damit die relativ einfache Grundform des Kaltprofilträgers prinzipiell zu verlassen.

Jede der gezeigten Profilformen des Kaltprofilträgers ist einer Fertigung durch Abkanten eines Blechstreifens entsprechender Länge, oder durch kontinuierliches Rollformen eines Blechbandes zugänglich.

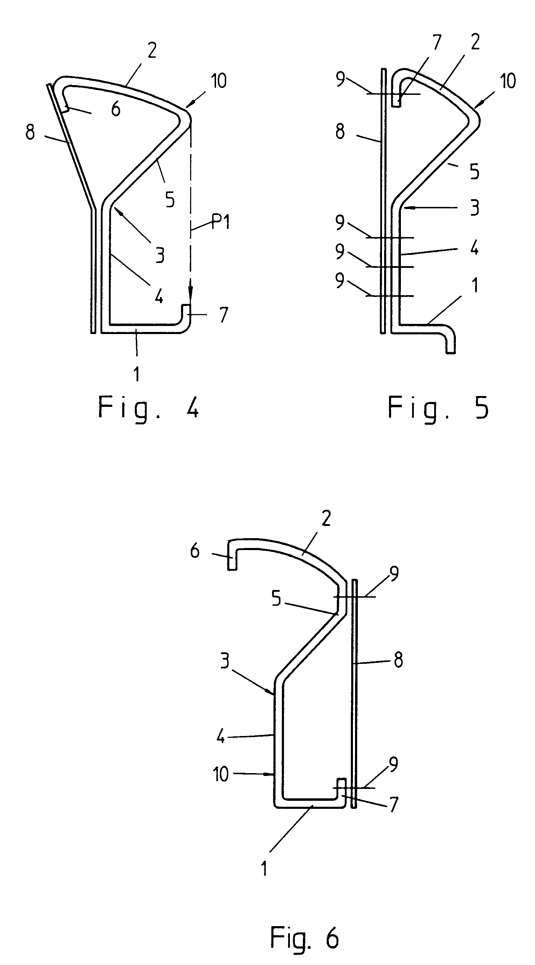

Bei dem in Fig. 4 dargestellten Kaltprofilträger 10 mit einer auf den übergang zwischen den unteren Teil 4 und den oberen Teil 5 des Steges 3 weisenden oberen Lippe 6 ist ein flächiges Verbindungselement 8 hier in Form einer Kunststoffplatte angesetzt, das mit der oberen Lippe 6 und dem unteren Teil 4 des Steges 3 verklebt ist.

In Fig. 5 ist das aufgesetzte flächige Verbindungselement 8 eine Stahlplatte, die durch Punktschweißungen 9 mit dem Kaltprofilträger 10 verbunden ist. Fig. 6 zeigt die Bildung eines geschlossenen Profilträgers, indem hier auf den Kaltprofilträger 10 nach Fig. 3 die Stahlplatte am oberen Teil 5 des Steges und an der unteren Lippe 7 angeschweißt ist.

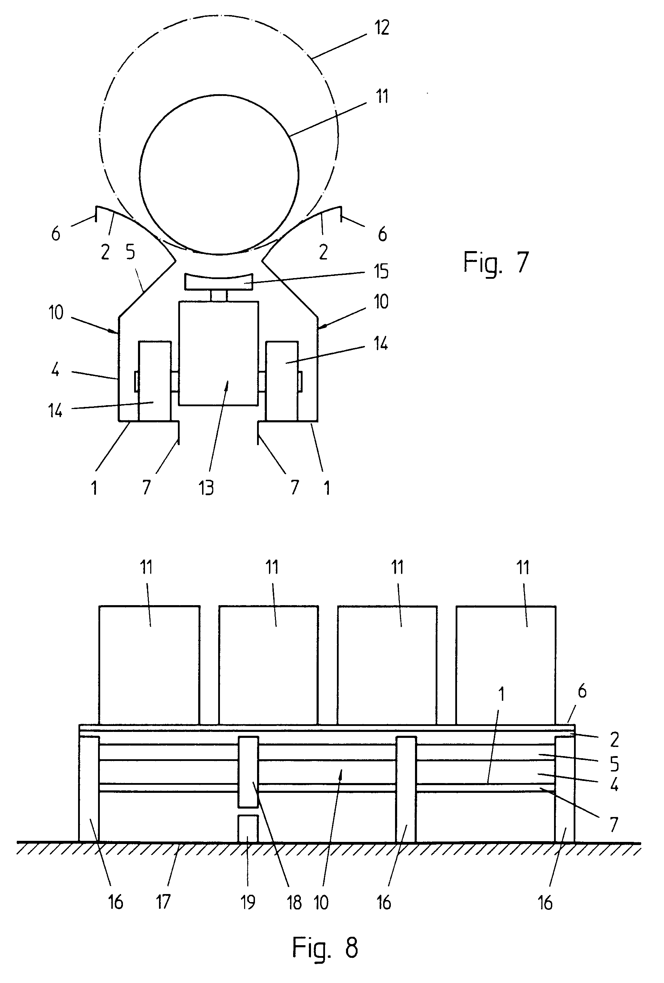

In Fig. 7 sind in schematischer Darstellung zwei Kaltprofilträger 10 zu sehen, die spiegelbildlich, mit Abstand und parallel zueinander angeordnet sind. Die voneinander weg ansteigenden Obergurte 2 sind Auflage für einen zylindrischen Körper 11. Es ist ein weiterer zylindrischer Körper 12 durch eine strichpunktierte Linie eingezeichnet um so zu verdeutlichen, daß hier ein Beispiel dafür gegeben ist, daß einmal die aus dem zylindrischen Körper 11 resultierende kleinere Auflast näher am Übergang zwischen oberem Teil 5 des Steges 3 und Obergurt 2 entfernt angreifen kann während die resultierende Auflast aus dem größeren zylindrischen Körper 12 davon weiter entfernt angreifen wird.

An dieser Stelle kann auch auf einen besonderen Vorteil der Erfindung hingewiesen werden, die darin besteht, daß eine klemmende Tendenz zwischen zylindrischem Körper 11 und den Obergurten 2 gänzlich vermieden wird.

Fig. 7 zeigt zusätzlich ein Transportwagen 13, dessen Räder 14 auf dem Untergurt 1 ihre Fahrbahn finden und der mit einer Hubvorrichtung 15 ausgerüstet ist. Durch Ausfahren der Hubvorrichtung 15 kann ein zylindrischer Körper 11, beispielsweise ein Papierballen, aufgenommen und abtransportiert werden.

So wird erkennbar, daß die Kaltprofilträger 10 in der Anordnung nach Fig. 7 zwei Funktionen erfüllen, nämlich die Aufnahme einer ruhenden Last über die Obergurte 2 wie auch die Aufnahme einer Transportlast über die Untergurte 1.

Fig. 8 zeigt die Seitenansicht einer Sektion aus einem Regallager, gegebenenfalls einem Hochregallager, bei der nun zusätzlich zu den in Fig. 7 dargestellten Grundelementen feste Widerlager 16 eingezeichnet sind, die bei dieser Ausführung unterhalb der oberen Lippe 6 des Kaltprofilträgers enden.

Bei dieser Gestaltung werden die zylinderischen Körper 11 nachgiebig federnd aufgenommen, sodaß beim Aufsetzen der Körper 11 harte Stoßbeanspruchungen vermieden werden. Bei der Lagerung nach dem Umschlagen von empfindlichen Papierballen in einem Hochregallager erweisen sich derartige Maßnahmen als vorteilhaft, weil sie auch Erschütterungen aus den Fahrbewegungen der Fahrzeuge 13 zu den Papierballen nicht durchschlagen lassen.

Neben den festen Widerlagern 16, die auf einem Träger 17 ruhen, ist ein elastisches Widerlager 18, ein die beiden Kaltprofilträger verbindender Rahmen, vorgesehen, das auf einem Lagerbock 19 horizontal gleitend gestützt sein kann.

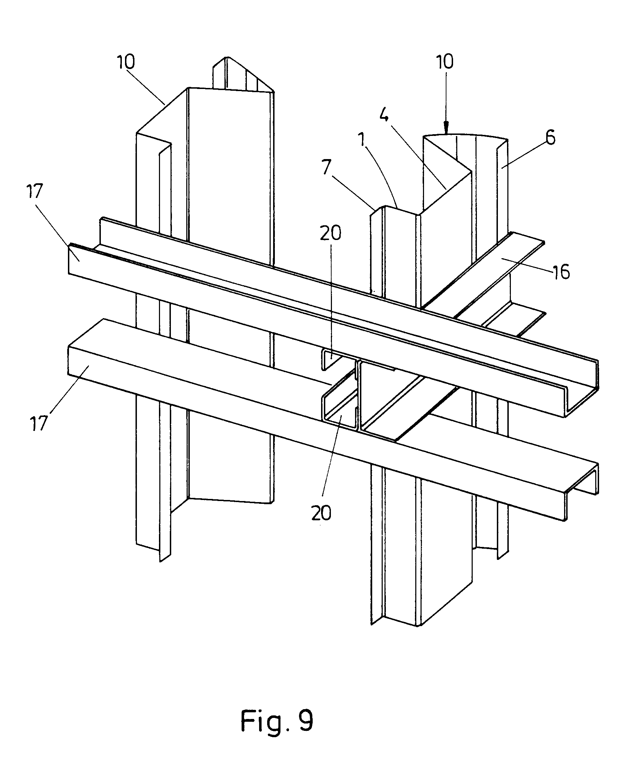

Fig. 9 zeigt einen Blick von unten auf eine Stützkonstruktion in einem Hochregallager mit U-Profilelementen 20, auf denen der Untergurt 1 des Profilträgers 10 aufliegt und an denen die untere Lippe 7 befestigt ist. Der untere Teil 4 des Steges und die obere Lippe 6 sind an dem Stützelement 16 angeschraubt. Die Profilform gemäß Fig. 2 hat sich hierfür besonders bewährt.

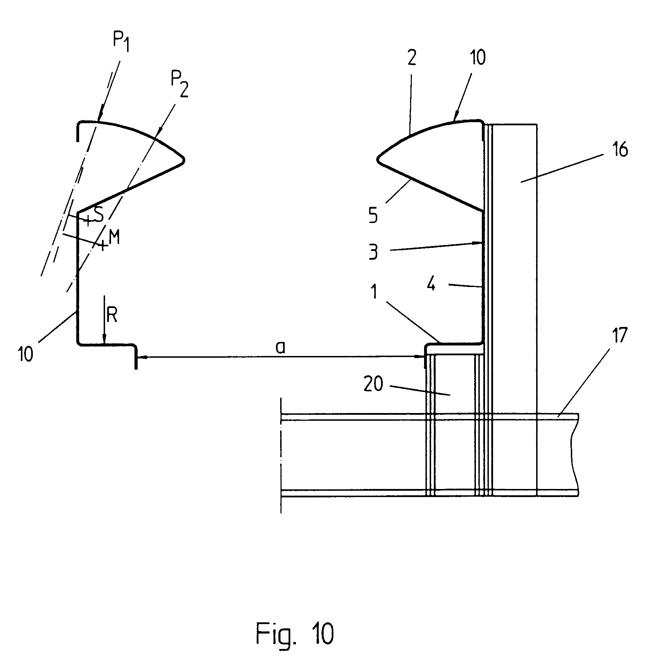

In der auf die Ausführungen nach Fig. 7 bezogenen Darstellung wird das System anhand von Fig. 10 weiter erläutert. Der Kaltprofilträger 10 dient zur Abtragung von Lasten, die mit R, P1 und P2 bezeichnet sind. Die zur Abtragung der Lasten vorgesehenen Kaltprofilträger 10, hier maßstäblich gezeichnet, sind im Abstand a zueinander angeordnet.

Die Last R resultiert aus einem Transportwagen 13, der sich in Längsrichtung auf den Untergurten 1 der beiden Kaltprofilträgern 10 bewegt.

Die Lasten P1 und P2 resultieren aus Lagerstofen (z.B. Papierballen) die auf dem Transportwagen 13 mit der Hubvorrichtung 15 transportiert werden und im abgesetzten Zustand auf den Obergurt 2 des Kaltprofilträgers 10 einwirken.

Da die Papierballen überlicherweise unterschiedliche Abmessungen besitzen, ergeben sich unterschiedliche Lastangriffspunkte für die Lasten P 1 und P2.

Durch die besondere Formgebung kann der Kaltprofilträger 10 sowohl die Last R als auch die Lasten P1 und P2 ohne nennenswerte Verdrillung des Querschnittes übertragen.

Dies ist eine Folge aus der besonderen erfindungsgemäßen Formgebung. Maßgebend für die Größe der Verdrillung eines Querschnittes sind die durch die äußeren Lasten bewirkten Torsionskräfte. Diese ergeben sich aus dem Drehmoment der äußeren Kräfte und dem senkrechten Abstand der Wirkungslinie dieser Kräfte zum Schubmittelpunkt M.

Bedingt durch die Form der Kaltprofilträger, liegt der Schubmittelpunkt M so, daß sich geringe Hebelarme d ergeben. Der Drehsinn der entstehenden Torsionsmomente ist außerdem so gerichtet, daß ein Festklemmen der Last zwischen den beiden Kaltprofilträger verhindert wird.

Bei unvermeidbaren elastischen Verformungen des Obergurtes unter den Lasten verschiebt sich außerdem noch die Wirkungslinie der Lasten vorteilhafterweise so, daß der Hebelarm d verkleinert wird.

Infolge der Last R entstehen nur vernachlässigbar kleine Torsionsmomente, da der Schubmittelpunkt M auf der Wirkungslinie der Last R liegt.

Ein weiterer Vorteil der besonderen Formgebung des Kaltprofilträgers 10 zeigt sich in der Lage des Schubmittelpunktes M zum Schwerpunkt S. Beide Punkte liegen nahe beieinander. Dadurch und durch die Lage der Hauptbeanspruchungsebenen der Profilform ergeben sich insgesamt ausgewogene Spannungsverhältnisse in allen Punkten des Querschnittes.

Schließlich lassen die maßstäblichen Darstellungen des Kaltprofilträgers 10 in Fig. 8 erkennen, daß bei dieser optimierten Form die Breite b1 des Untergurtes 1 zum Maß b2 der Projektion des Obergurtes 2 etwa im Verhältnis 1 : 1,75 steht und daß sich die Querschnittslängen vom oberen Teil 5 zum unteren Teil 4 des Steges 3 etwa wie 1 : 1,25 verhalten. Der stumpfe Winkel β zwischen unterem Teil 1 und oberem Teil 2 des Steges 3 liegt bei 115°; die Winkel γ und γ1 am Ansatz und Ende des Obergurtes 2 zur Horizontalen betragen 30° und 20°.

Ein gängiger Bautyp nach Fig. 2 eines aus 4,5 mm dickem Stahlblech hergestellten Kaltprofilträgers hat einschließlich einer 50 mm langen unteren Lippe eine Bauhöhe von ca. 520 mm und eine Baubreite von ca. 180 mm. Der Biegeradius in den Übergängen zwischen unterer Lippe 6 und Untergurt 1 sowie zwischen Untergurt 1 und vertikalem unterem Teil 4 des Steges 3 ist dabei mit etwa dem 1,6-bis 1,8-fachen der Blechdicke relativ klein, der Biegeradius im Knick zwischen unterem Teil 4 und oberem Teil 5 des Steges 3 sowie zwischen dem oberen Teil 4 des Steges 3 und dem Obergurt entspricht etwa der 2 bis 3-fachen Blechdicke und die obere Lippe 6 ist mit einem Biegeradius von 2,5 bis 4 fachen der Blechdicke angesetzt. Der obere Teil 5 des Steges 3 steht zum unteren Teil 4 etwa in einem Längenverhältnis von 1 zu 1,2. Der obere Teil 5 des Steges 3 und der Obergurt 1 sind etwa gleichlang.

## Patentansprüche

1. Kaltprofilträger mit einem zu einer Seite weisenden Untergurt (1), einem zur anderen Seite weisenden Obergurt (2) und mit einem Untergurt (1) und Obergurt (2) miteinander verbindenden stumpfwinklig geknickten Steg (3), sowie mit einer Lippe (6) am Obergurt (2) und mit einer Lippe (7) am Untergurt (1), wobei der Steg (3) in seinem Mittelbereich zu der Seite hin, auf der die Lippe (7) des Untergurtes (1) liegt, geknickt ist und in diesem knick des Steges (3) der dem Untergurt (1) benachbarte gerade vertikale untere Teil (4) des Steges (3) mit dem weitgehend geraden oberen Teil (5) des Steges (3) den stumpfen Winkel (β) bildet,

wobei der Obergurt (2) breiter ist als der Untergurt (1) und wobei der Obergurt (2) in Bezug auf eine durch den vertikalen Teil (4) des Steges (3) bestimmte vertikale Bezugsebene (E3) mindestens bis zu dieser vertikalen Bezugsebene (E3) zurückgeführt ist

**dadurch gekennzeichnet,**

daß der Untergurt (1) mit dem vertikalen unteren Teil (4) des Steges (3) einen Winkel (α) bildet, der zwischen 80° und 100° liegt, daß der an den oberen Teil (4) des Steges (3) anschließende Obergurt (2) gegenüber der horizontalen Ebene (E2) in einem spitzen Winkel (γ) von 5° bis 50° steht, und daß der Obergurt (2) leicht gekrümmt ist.

2. Kaltprofilträger nach Anspruch 1,

dadurch gekennzeichnet,

daß der Winkel (α) ein rechter Winkel ist.

3. Kaltprofilträger nach einem der Ansprüche 1 und 2,

dadurch gekennzeichnet,

daß die obere Lippe (6) des Obergurtes und die untere Lippe (7) des Untergurtes (1) in die gleiche Richtung zeigen und parallel zum vertikalen unteren Teil (4) des Steges (3) liegen.

4. Kaltprofilträger nach einem der Ansprüche 1 bis 3,

dadurch gekennzeichnet,

daß der untere Teil (4) des Steges (3) und die obere Lippe (6) in der senkrechten Bezugsebene (E3) liegen.

5. Kaltprofilträger nach einem der Ansprüche 1 bis 4,

dadurch gekennzeichnet,

daß die im Anschlußbereich des Obergurtes (2) durch den Winkel (γ) bestimmte Steigung des Obergurtes (2) im Bereich seiner freien Seite, bzw. im Bereich des Überganges zur oberen Lippe (6) einen Winkel (γ1) von 5° bis 30° mit der horizontalen Ebene (E2) bildet.

6. Kaltprofilträger nach einem der Ansprüche 1 - 5,

dadurch gekennzeichnet,

daß der Untergurt (1) innerhalb einer zum vertikalen unteren Teil (4) des Steges (3) parallelen Projektion des Obergurtes (2) in die durch den Ansatz des Untergurtes (1) gehende horizontale Ebene (E1) liegt.

7. Kaltprofilträger nach einem der Ansprüche 1 bis 6,

dadurch gekennzeichnet,

daß der untere Teil (4) des Steges (3) und die obere Lippe (6) über ein seitlich angesetztes, flächiges Verbindungselement (8) miteinander verbunden sind.

8. Verwendung eines Kaltprofilträgers nach einem der Ansprüche 1 bis 7 als Stützelement für zylindrische Körper (11,12) mit der Maßgabe, daß zwei Kaltprofilträger (10) spiegelbildlich, mit Abstand und parallel zueinender angeordnet und die voneinander weg ansteigenden Obergurte (2) Auflagen für die zylindrischen Körper (11,12) sind.

## Claims

1. A cold-rolled girder having: a lower flange (1) pointing to one side; an upper flange (2) pointing to the other side; a web (3) bent at an obtuse angle which interconnects the lower flange (1) and the upper flange (2); and a lip (6) on the upper flange (2) and a lip (7) on the lower flange (1), the web (3) being bent in its central zone towards the side on which the lip (7) of the lower flange (1) is disposed, while in said bend of the web (3) the straight vertical lower portion (4) of the web (3) adjacent the lower flange (1) forms the obtuse angle ($\beta$) with the substantially straight upper portion (5) of the web (3), the upper flange (2) being wider than the lower flange (1) and the upper flange (2) being returned in relation to a vertical reference plane (E3) determined by the vertical portion (4) of the web (3) at least as far as said vertical reference plane (E3), characterized in that the lower flange (1) forms with the vertical lower portion (4) of the web (3) an angle ($\alpha$) which is between 80° and 100°; the upper flange (2) adjoining the upper portion (4) of the web (3) standing at an acute angle ($\gamma$) of 5° to 50° in relation to the horizontal plane (E2); and the upper flange (2) is slightly curved.

2. A cold-rolled girder according to claim 1, characterized in that the angle ($\alpha$) is a right angle.

3. A cold-rolled girder according to one of claims 1 and 2, characterized in that the upper lip (6) of the upper flange and the lower lip (7) of the lower flange (2) point in the same direction and lie parallel with the vertical lower portion (4) of the web (3).

4. A cold-rolled girder according to one of claims 1 to 3, characterized in that the lower portion (4) of the web (3) and the upper lip (7) lie in the vertical reference plane (E3).

5. A cold-rolled girder according to one of claims 1 to 4, characterized in that the pitch of the upper flange (2), determined by the angle ($\gamma$) in the connecting zone of the upper flange (2), forms an angle ($\gamma$1) of 5° to 30° with the horizontal plane (E2) in the zone of its free side, in the zone of the transition to the upper lip (6).

6. A cold-rolled girder according to one of claims 1 to 5, characterized in that the lower flange (1) lies within a projection of the upper flange (2), parallel with the vertical lower portion (4) of the web (3), into the horizontal plane (E1) extending through the attachment of the lower flange (1).

7. A cold-rolled girder according to one of claims 1 to 6, characterized in that the lower portion (4) of the web (3) and the upper lip (6) are interconnected via a laterally attached flat connecting element (8).

8. Use of a cold-rolled girder according to one of claims 1 to 7 as a supporting element for cylindrical members (11, 12) wherein two cold-rolled girders (10) are disposed laterally inverted, spaced out and parallel with one another, and the upper flanges (2) rising away from one another are supports for the cylindrical members (11, 12).

## Revendications

1. Poutre profilée à froid avec une ceinture inférieure (1) tournée d'un côté, une ceinture supérieure (2) tournée de l'autre côté et avec une entretoise (3) repliée à angle obtus reliant la ceinture inférieure (1) et la ceinture supérieure (2) l'une à l'autre, ainsi qu'avec une lèvre (6) sur la ceinture supérieure (2) et avec une lèvre (7) sur la ceinture inférieure (1), l'entretoise (3) étant pliée dans sa zone médiane vers le côté où se trouve la lèvre (7) de la ceinture inférieure (1) et, dans ce pli de l'entretoise (3), la partie inférieure droite verticale (4) de l'entretoise (3) adjacente à la ceinture inférieure (1) forme, avec la partie supérieure (5) largement droite de l'entretoise (3) l'angle obtus ($\beta$), la ceinture supérieure (2) étant plus large que la ceinture inférieure (1) et la ceinture supérieure (2) étant ramenée, en référence à un plan de référence vertical (E3) déterminé par la partie verticale (4) de l'entretoise (3), au moins jusqu'à ce plan de référence vertical (E3),

caractérisée en ce que la ceinture inférieure (1) forme avec la partie inférieure verticale (4) de l'entretoise (3) un angle ($\alpha$) qui se trouve entre 80° et 100°,

que la ceinture supérieure (2) se raccordant à la partie supérieure (4) de l'entretoise (3) se trouve par rapport au plan horizontal (E2) à un angle aigu ($\gamma$) de 5° à 50° et que la ceinture supérieure (2) est légèrement courbée.

2. Poutre profilée à froid selon la revendication 1, caractérisée en ce que l'angle ($\alpha$) est un angle droit.

3. Poutre profilée à froid selon l'une des revendications 1 et 2,
   caractérisée en ce que la lèvre supérieure (6) de la ceinture supérieure et la lèvre inférieure (7) de la ceinture inférieure (1) sont dirigées dans la même direction et sont parallèles à la partie inférieure verticale (4) de l'entretoise (3).

4. Poutre profilée à froid selon l'une des revendications 1 à 3,
   caractérisée en ce que la partie inférieure (4) de l'entretoise (3) et la lèvre supérieure (6) se trouvant dans le plan de référence vertical (E3).

5. Poutre profilée à froid selon l'une des revendications 1 à 4,
   caractérisée en ce que la pente de la ceinture supérieure (2) déterminée, dans la zone de raccordement de la ceinture supérieure (2), par l'angle ($\gamma$), forme, dans la zone de son côté libre ou respectivement dans la zone de passage à la lèvre supérieure (6), un angle ($\gamma1$) de 5° à 30° avec le plan horizontal (E2).

6. Poutre profilée à froid selon l'une des revendications 1 à 5,
   caractérisée en ce que la ceinture inférieure (1) se trouve à l'intérieur d'une projection de la ceinture supérieure (2) parallèlement à la partie inférieure verticale (4) de l'entretoise (3) dans le plan horizontal (E1) passant par la saillie de la ceinture inférieure (1).

7. Poutre profilée à froid selon l'une des revendications 1 à 6,
   caractérisée en ce que la partie inférieure (4) de l'entretoise (3) et la lèvre supérieure (6) sont reliées entre elles par l'intermédiaire d'un élément de liaison plan (8) monté latéralement.

8. Poutre profilée à froid selon l'une des revendications 1 à 7, en tant qu'élément d'appui pour des corps cylindriques (11, 12) avec la caractéristique que deux poutres profilées à froid (10) sont disposées parallèlement l'une à l'autre à écartement et en images dans un miroir et les ceintures supérieures (2) montant en s'écartant l'une de l'autre forment des supports pour les corps cylindriques (11, 12).

Fig. 1

Fig. 2

Fig. 3

Fig. 4

Fig. 5

Fig. 6

Fig. 7

Fig. 8

Fig. 9

Fig. 10